# EUROPEAN PATENT SPECIFICATION

(11) **EP 4 655 707 B1**
(45) Date of publication and mention of the grant of the patent: **11.11.2026**
(21) Application number: 24701952.4
(22) Date of filing: 25.01.2024
(51) Int. Cl.: G06N 3/044, G06N 3/067

(54) **METHOD AND APPARATUS FOR IMPLEMENTING AT LEAST A FIRST RECURRENT UNIT OF A RECURRENT OPTICAL NEURAL NETWORK**
VERFAHREN UND VORRICHTUNG ZUR IMPLEMENTIERUNG VON MINDESTENS EINER ERSTEN WIEDERKEHRENDEN EINHEIT EINES WIEDERKEHRENDEN OPTISCHEN NEURONALEN NETZWERKS
PROCÉDÉ ET APPAREIL POUR METTRE EN OEUVRE AU MOINS UNE PREMIÈRE UNITÉ RÉCURRENTE D'UN RÉSEAU NEURONAL OPTIQUE RÉCURRENT

(30) Priority: 25.01.2023 EP 23153328
(43) Date of publication of application: 03.12.2025
(73) Proprietor: Max-Planck-Gesellschaft zur Förderung der Wissenschaften e.V., 80539 München (DE)
(72) Inventor: BECKER, Steven, 91058 Erlangen (DE); STILLER, Birgit, 91058 Erlangen (DE)
(74) Representative: FDST Patentanwälte
(86) International application number: PCT/EP2024/051779
(87) International publication number: WO 2024/156808

(56) References cited:
- MERKLEIN MORITZ ET AL: "A chip-integrated coherent photonic-phononic memory", NATURE COMMUNICATIONS, vol. 8, no. 1, 18 September 2017 (2017-09-18), XP093052582, Retrieved from the Internet <URL:https://www.nature.com/articles/s41467-017-00717-y.pdf> DOI: 10.1038/s41467-017-00717-y
- ANONYMOUS: "Optical neural network", 13 April 2020 (2020-04-13), XP093052570, Retrieved from the Internet <URL:https://en.wikipedia.org/w/index.php?title=Optical_neural_network&oldid=1134031507> [retrieved on 20230607]
- LIAN CHUANYU ET AL: "Photonic (computational) memories: tunable nanophotonics for data storage and computing", NANOPHOTONICS, vol. 11, no. 17, 16 May 2022 (2022-05-16), pages 3823 - 3854, XP093052588, DOI: 10.1515/nanoph-2022-0089
- Z. ZHU ET AL: "Stored Light in an Optical Fiber via Stimulated Brillouin Scattering", SCIENCE, vol. 318, no. 5857, 14 December 2007 (2007-12-14), US, pages 1748 - 1750, XP055367866, ISSN: 0036-8075, DOI: 10.1126/science.1149066
- ANONYMOUS: "Image of the cross section of a polarization", 24 April 2022 (2022-04-24), XP093052667, Retrieved from the Internet <URL:https://en.wikipedia.org/w/index.php?title=Polarization-maintaining_optical_fiber&oldid=1084468872> [retrieved on 20230607]

## Description

The invention relates to a method for implementing at least a first recurrent unit of a recurrent optical neural network by means of an optical waveguide, wherein subsequent laser pulse pairs, each pair consisting of a control signal pulse and a data signal pulse, are counter-propagated through said waveguide. The invention furthermore relates to an apparatus for implementing at least a first recurrent unit of a recurrent optical neural network.

In everyday life there are numerous tasks where memory is required in order to solve them correctly. This is one reason why from artificial neural networks (ANNs) the branch of recurrent neural networks (RNNs) has evolved. RNNs are ANNs with so-called recurrent neurons which allows them to memorize and store input signals for a certain time period. Through this feature, an ANN may process a current input based on the past inputs.

A recurrent neuron of an RNN has a self-referencing component that acts as a neuron's memory, which enables the RNN to recognize and predict sequences. RNNs are applied for numerous applications including language, video and image processing. For instance, RNNs are already in use for generating complex texts.

However, the possibilities gained through ANNs and RNNs come at the cost of a computationally intense model training, eventually leading to a high energy consumption. In addition, the computational power of data centers used to train ANNs are limited in performance by the von Neumann processing units used to implement ANNs. As consequence, researchers study more specific non-von Neumann architectures specifically designed for machine learning and deep learning applications.

One possible solution to overcome the current limitations could be the transfer of electronical ANNs into the optical domain. The resulting optical neural networks (ONNs) have attracted great interest over the last decades due to their promises of high processing speed and bandwidth, as well as low dissipative losses at ambient temperature. In particular, the possibility of collapsing many computational steps into a single process, which is natural in most ONN designs, might lead to a strong increase in the computational efficiency.

Although within ONNs, the field of optical ANNs made huge progress over the last couple of years, the field of recurrent ONNs (RONNs) is still narrow. Currently, there are only few ways to implement a recurrent operation within an ONN, e.g., based on optical reservoir computing, on free-space optics or on inverse design. In particular, fully integrated solutions are still rare.

Moritz Merklein et al., "A chip-integrated coherent photonic-phononic memory", Nature Communications volume 8, Article number: 574 (2017), doi:10.1038/ s41467-017-00717-y shows the generation of a phonon by means of two optical pulses counterpropagating through a chalcogenide chip and the use of this phonon as a storage memory which may be read out from the chip by sending in another optical pulse. Yet, this technique fails to disclose any application related to the field of ONNs.

It is the object of the invention to present an implementation of a recurrent operation for a recurrent optical neural network in a way that allows for integration into other systems, for scalability and that has the best possible properties regarding stability of the recurrent operation.

According to the invention, this object is achieved by a method for implementing at least a first recurrent unit of a recurrent optical neural network by means of an optical waveguide, wherein subsequent laser pulse pairs, each pair consisting of a control signal pulse and a data signal pulse, are counter-propagated through said waveguide in a way such that for a given pulse pair, the control signal pulse is coupled into a first ending of the waveguide and propagated towards a second ending of the waveguide, and the data signal pulse is coupled into said second ending of the waveguide and propagated towards said first ending of the waveguide.

The method demands that for a given pulse pair, an optical frequency of the data signal pulse is set to be within a bandwidth of a Brillouin frequency shift of the waveguide above an optical frequency of the control signal pulse, and/or that a difference between an optical frequency of the data signal pulse and a sum of an optical frequency of the control signal pulse of the same pulse pair and a Brillouin frequency shift, is set to be within a bandwidth of said Brillouin frequency shift, and that a time delay between a first pulse pair and a subsequent second pulse pair is set to be less than a decay time of an acoustic wave generated by a stimulated Brillouin scattering process in the waveguide, such that by propagating a second data signal pulse of the second pulse pair through the waveguide, a dependence of said second data signal pulse on a first data signal pulse of the first pulse pair is induced via a first acoustic wave generated by a stimulated Brillouin scattering process. Embodiments of particular advantage, which may be inventive in their own right, are outlined in the depending claims and in the following description.

The object of the invention is furthermore achieved by an apparatus for implementing at least a first recurrent unit of a recurrent optical neural network, comprising an optical processing element including an optical waveguide, means for generating subsequent pairs of laser pulses, each pair consisting of a control signal pulse and a data signal pulse, wherein said means for generating the pulse pairs are configured to set an optical frequency of the control signal pulse of a pulse pair to be within a bandwidth of a Brillouin frequency shift of the waveguide above an optical frequency of the data signal pulse of the same pulse pair, and/or to set a difference between an optical frequency of the data signal pulse and a sum of an optical frequency of the control signal pulse of the same pulse pair and a Brillouin frequency shift, is set to be within a bandwidth of said Brillouin frequency shift, and said apparatus furthermore comprising means for coupling in the control signal pulses of subsequent pulse pairs into a first ending of said waveguide, and means for coupling in the data signal pulses into a second ending of said waveguide.

The apparatus is configured to set a time delay between a first pulse pair and a two subsequent second pulse pairs to be less than a decay time of a pho-non generated by a stimulated Brillouin scattering in the waveguide, such that by propagating a second data signal pulse of a the second pulse pair through the waveguide, a dependence of said second data signal pulse on a first data signal pulse of a the first pulse pair is induced via a first acoustic wave generated by a stimulated Brillouin scattering process.

The apparatus for implementing at least a first recurrent unit of a recurrent optical neural network shares the advantages of the corresponding, aforementioned method. The features, favorable embodiments and their specific assets of said method for implementing at least a first recurrent unit of a recurrent optical neural network, may be directly transferred, mutatis mutandis, to the apparatus.

While the notion of an artificial neural network (ANN) is typically directed to the abstract computational concept of information processing via a specific algorithm with specific properties regardless its physical implementation, the notion of an optical neural network (ONN) here shall denote any apparatus designed and configured to process optical information (such as light pulses, preferably laser pulses, in particular with modulations in phase and/or amplitude for encoding said information) which comprises a plurality of different nodes (or neurons), each node being configured for an interaction of different entities of said optical information, and the nodes being connected via optical waveguides, wherein every node is connected at least to another node. A recurrent optical neural network (RONN) in this respect shall denote an ONN comprising at least one recurrent node, which by definition is a node configured to store an output information of the node to be used for a subsequent input operation. A recurrent node (or recurrent neuron) comprises a recurrent unit which is configured to perform a recurrent operation, i.e., an operation using any sort of memory of a previously stored input, and furthermore may comprise a module configured to implement a mapping, in particular a non-linear mapping of the received input to an output, particularly by means of a so-called (non-linear) activation function. In this respect, the method for implementing at least a first recurrent unit of a RONN may be used in particular for implementing a recurrent operation in a RONN and/or in an implementation of a recurrent node of a RONN.

The method implements such a recurrent unit, using an optical waveguide, preferably an optical fiber, as the underlying physical means, by using subsequent pairs of laser pulses, each of these pulse pairs comprising a respective control signal pulse and a data signal pulse, and by counter-propagating these two pulses through the waveguide, i.e., the two pulses of each pulse pair are coupled into the waveguide at opposite its endings such that the propagation direction of the control signal pulse is opposite to the propagation direction of the data signal pulse in the waveguide. Preferably, the control signal pulse and the data signal pulse of each pulse pair are polarization-matched.

The condition that for a given pulse pair, an optical frequency of the data signal pulse is set to be within a bandwidth of a Brillouin frequency shift of the waveguide above an optical frequency of the control signal pulse, is preferably to be understood that an optical frequency v_{d} of the data signal pulse of a pulse pair shall be set to be given by an optical frequency v_{c} of the control signal pulse plus another frequency νₐ to be within a bandwidth Δ_{b} of a Brillouin frequency shift v_{b}, i.e., v_{d} = ν_{d} + νₐ, with |νₐ - v_{b}| ≤ Δ_{b}/2, or | ν_{d} - ν_{c} - ν_{b} | ≤ Δ_{b}/2. The bandwidth Δ_{b} of the Brillouin frequency shift v_{b} denotes the range of frequencies an acoustic wave generated by a Brillouin scattering process may attain at all, and may in particular depend on geometric and/or material properties of the waveguide and/or on a pulse length of the control and/or data signal pulse. In particular, the bandwidth Δ_{b} of the Brillouin frequency shift v_{b} may be obtained in frequency domain by a convolution bandwidth of the waveguide with the spectral bandwidth due to the finite pulse length. Preferably, the Brillouin frequency shift v_{b} may be from a range from 1 GHz to 25 GHz.

The term Brillouin scattering denotes the scattering of light waves on acoustic waves, or, equivalently, the scattering from photons with acoustic phonons (in the following, the term "phonons" shall denote acoustic phonons). Acoustic waves are propagating pressure changes that create a periodically oscillating density, and thus, a periodically changing refractive index in a medium. The inelastic interaction of light wave with these changes of the refractive index, i.e., of a photon and phonon, leads to a frequency shift of the scattered light that depends on the velocity of the sound wave. Details on the principles of Brillouin scattering may be found in C. Wolff, M. Smith, B. Stiller, and C. Poulton, "Brillouin scattering - theory and experiment: tutorial," JOSA B, vol. 38, no. 4, pp. 1243-1269, 2021.

In the present case of stimulated Brillouin scattering (SBS), instead of a single pump beam, the control signal pulse and the counterpropagating data signal pulse lead to an interference between the control signal pulse and the data signal pulse, i.e., amplitude variations of the resulting superposition signal oscillating with the difference frequency, which is set to be in the small bandwidth window around said Brillouin shift frequency. If the correct phase matching conditions are met, the counterpropagating control and data signal pulses may lead to density oscillations (i.e., pressure/density waves) due to electrostriction of the fiber medium, i.e., to the excitation or enhancement of an acoustical wave, adding a phonon in a specific acoustic mode. The acoustic field/pressure wave changes the dielectric field, in particular creating a refractive index grating inside the medium. The data signal pulse scatters with the refractive index grating, creating the phonon. Due to energy conservation, the energy for this phonon is then taken from the data signal pulse, lowering its frequency by the frequency amount of the generated or excited phonon, i.e., by the Brillouin frequency shift. The phonon is added to the density pool enhancing the process and thus additionally driving it to create stimulated Brillouin scattering. The so-called Brillouin frequency shift can be derived as v_{b} = 2nVₐ / λ_{c} with Vₐ denoting the acoustic velocity in the fiber, n being its refractive index and λ_{c} being the wave length of the control signal pulse. Furthermore, momentum conservation conditions apply for the generated phonon with respect to the data and control signal pulses. As the initial and the backscattered light field interfere with each other and, thereby, accelerate the forming of the acoustic wave, which in turn increases the amount of light that is backscattered. Hence, a sort of feedback loop is formed that yields a stimulated process which significantly enhances the efficiency of Brillouin scattering.

As the SBS process is coherent, optical information encoded in the first data signal pulse, i.e., in its amplitude and/or its phase, of a first pulse pair, may be transmitted to the first acoustic wave (i.e., to its phonons) generated by the first pulse pair via the SBS process. Thus, the SBS-generated phonons may serve as a memory for the optical information encoded in the phase and/or amplitude of the data signal pulses.

A second pulse pair, subsequent to the first pulse pair, then is coupled into the waveguide, i.e., preferably a second control signal pulse of the second pulse pair is coupled into the first ending of the waveguide, and a second data signal pulse of the second pulse pair is coupled into the second ending of the waveguide, in order to counterpropagating the second data pulse through the waveguide with respect to the second control signal pulse. The delay time between the first and second pulse pairs, preferably defined as the time between the two interactions of each pulse pair's two pulses at a spatially restricted area, is set to be less than the decay time of an SBS-generated phonon in the waveguide. The second data signal pulse may then interact with the first acoustic wave, generated from the SBS process induced by the first pulse pair, and thus retrieve the optical information of the first data signal pulse stored in the first acoustic wave. An optical information of the outgoing second data signal pulse. i.e., the second data signal pulse after an interaction with the first acoustic wave, then has been modified by the first acoustic wave, and in turn, by the optical information of the first data signal pulse. This way, an optical recurrent operation, and thus, a recurrent unit of an RONN has been implemented. The dynamics of SBS can be described by coupled partial differential equations for the electric field and for the acoustic wave. With the proper approximations applying to the present case (in particular, subsequent pulse pairs, rotating frame and slowly-varying wave), these translate into coupled partial differential equations for the two optical modes and for the acoustic wave. The existence of a non-zero acoustic wave for the second pulse pair is then an initial condition which drastically changes the dynamics of the entire system.

The recurrent unit implemented as described above is very stable against temperature changes and strain variations, which cause only small changes in the Brillouin frequency shift. The decay time is in the order of 10 ns (and slightly above, i.e., possibly about 12 ns), such that it is possible to generate subsequent pulse pairs of short pulses (e.g., 2 ns short) which are completely achievable with present technology for the implementation.

Preferably, for a given pulse pair, a strength of an interaction between the corresponding control signal pulse and data signal pulse for generating an acoustic wave by a stimulated Brillouin scattering process, is controlled by an amplitude and/or an envelope and/or an optical power of the control signal pulse. This allows for adjusting how much of an optical information of the first data signal pulse shall be transferred to the first acoustic wave and shall be made available for the subsequent second data signal pulse.

In an embodiment, for each pulse pair, an optical power of the control signal pulse is at least 10 dB, preferably at least 15 dB and most preferably at least 20 dB higher than an optical power of the data signal pulse, and/or an optical power of the control signal pulse is varied by at most +/- 10 dB, preferably at most +/- 5 dB and most preferably at most +/- 3 dB for controlling the strength of an interaction between the control signal pulse and the data signal pulse. Preferably, an optical power of the control signal pulse is at most 30 dB higher than an optical power of the data signal pulse. The relations between the optical powers given here ensure a high efficiency for the SBS process and thus, for the generation of the acoustic wave required for the recurrent unit. The given values for the variation of the optical power for controlling the interaction strength ensure that the interaction efficiency is not compromised.

In an embodiment, for a given pulse pair, said difference between an optical frequency of the data signal pulse and a sum of an optical frequency of the control signal pulse of the same pulse pair and a Brillouin frequency shift is set to match the Brillouin frequency shift, i.e., ν_{d} - ν_{c} - ν_{b} = 0, with the optical frequencies ν_{d}, ν_{c} of the data and control signal pulse, and the Brillouin frequency shift v_{b}. This way, the SBS has the highest efficiency.

In an alternative or additional embodiment, for at least one given pulse pair, said difference between an optical frequency of the data signal pulse and a sum of an optical frequency of the control signal pulse of the same pulse pair and a Brillouin frequency shift is set to be different from the Brillouin frequency shift, i.e., | ν_{d} - ν_{c} - ν_{b} | > 0.

This means that at least for a specific pulse pair, the difference in the optical frequencies of the data and control signal pulses has a "detuning" with respect to the Brillouin frequency shift in that it lies off the exact Brillion frequency shift that yields the highest efficiency. The detuning causes that a phase shift is "imprinted" on the acoustic wave, said phase shift propagating through the waveguide in dependence on the detuning. A subsequent acoustic wave, generated by a subsequent pulse pair, will then interfere with the phase-shifted acoustic wave, said interference being either in phase only (if the subsequent pulse pair has the same detuning) or both in phase and frequency (if the subsequent pulse pair has a different frequency difference, e.g., if its optical frequency difference lies within the bandwidth of the Brillouin frequency shift).

The possibility for acoustic interference of the acoustic waves generated by two subsequent optical pulse pairs via detuning of at least one of the pulse pairs gives an additional degree of freedom, and furthermore introduces a nonlinearity into the system, increasing the system complexity. This nonlinearity may be employed in order to implement an "extreme learning machine" or other kinds of machine learning, by optical means.

In an embodiment, sets of subsequent pulse pairs are prepared in different optical frequency bands, each frequency band enclosing a different set of subsequent pulse pairs, wherein for each frequency band, the difference between the optical frequencies of the control signal pulse and the data signal pulse of the corresponding pulse pair in the frequency band is set within a bandwidth of a Brillouin frequency shift of the waveguide, in order to implement a plurality of parallel recurrent units in frequency domain. E.g., a "red" set of subsequent lower frequency pulse pairs, each of which comprising their respective control and data signal pulses (spaced apart in frequency domain by the Brillouin frequency shift), as well as a "green" set of subsequent mid frequency pulse pairs and a "blue" set of subsequent higher frequency pulse pairs may be prepared (i.e., red/green/blue first/second/... control/data signal pulse) in order to implement a "red" recurrent unit, a "green" recurrent unit and a "blue" recurrent unit in parallel in the waveguide. Hereby, the high degree of both frequency stability and frequency selectivity of the SBS process, is optimally employed.

Preferably, to this end, a bandwidth of said optical frequency bands, given by a difference of two adjacent control signal pulse frequencies and/or two adjacent data signal pulse frequencies, is set in dependence on the Brillouin frequency shift in the waveguide and/or a pulse width of a control signal pulse and/or a data signal pulse of the pulse pairs, respectively. This in particular comprises that the "stacking" of parallel recurrent units in frequency domain may be done in dependence of the space each of the recurrent units requires in frequency domain, which is given in particular by the Brillouin frequency shift, but may also be affected by the pulse widths (for ultra-short pulses).

In a preferred embodiment, a pulse length for a control signal pulse and/or a data signal pulse, e.g., said first and/or second control and/or data signal pulse, is set to be at least 10 ps, preferably at least 100 ps, most preferably at least 500 ps, and/or wherein a time delay (i.e., a dead time) between two subsequent pulse pairs, e.g., between said first and second pulse pair, is set in dependence on a decay time of an acoustic wave in the waveguide. In particular, the dead time may be chosen to be at most half of said decay time, preferably ¼ of said decay time. In particular, a dead time between two subsequent pulse pairs is set to be in the order of magnitude of a pulse length for the corresponding pulses. In particular, a pulse length for the mentioned pulses may be set to be at most 100 ns, preferably at most 10 ns, and most preferably at most 1 ns. These pulse lengths and dead times are technically feasible with reasonable effort and ensure that at least two subsequent pulse pairs may be implemented before an SBS-generated acoustic wave decays.

In an embodiment, by means of a sole control signal pulse without a corresponding data signal pulse, a reset operation is performed on the at least one recurrent unit by erasing the acoustic wave in the waveguide. Sometimes it might be useful to "clear" the memory of the recurrent unit, which may be achieved by this reset operation. In case that it is desired that a specific data signal pulse passes the recurrent unit without being affected by the recurrent unit, i.e., without interacting with the optical information that has been stored in the acoustic wave by an earlier data signal pulse, it suffices to propagate the specific data signal pulse through the waveguide without a counter-propagating control signal pulse, such that there is no SBS interaction of the specific data signal pulse with the acoustic wave generated from earlier data and control signal pulses.

Preferably, the optical fiber is used as said waveguide, and in particular, a polarization preserving fiber is used as said waveguide. Then, further optical information may be encoded using the polarization degree of freedom.

In this respect, in another embodiment, the first pulse pair with the respective first control signal pulse and first data signal pulse is prepared in one of the two preserved polarizations, and the reset operation is performed by a control signal pulse in the other preserved polarization. While the second control signal pulse does not interact with the first pulse pair given in the other polarization, it still interacts with the acoustic wave generated by the first pulse pair, in order to perform the reset operation.

In another preferred embodiment, a chain of recurrent units is implemented in the waveguide by means of a plurality of subsequent pulse pairs of respective control and data signal pulses, wherein the number of pulse pairs is set in dependence on a pulse length, in particular, in dependence on an upper bound on the pulse length for a control and/or data signal pulse, and/or a dead time, in particular, in dependence on an upper bound on the dead time, between two subsequent pulse pairs, and/or in dependence on a decay time of an acoustic wave generated by a stimulated Brillouin scattering process.

In a preferred embodiment, the optical waveguide allows for multiple "cross-pulse-pair" interactions along its length, i.e., a length of said optical waveguide is chosen, in dependence on said time delay and/or said decay time of an acoustic wave generated by a stimulated Brillouin scattering in the waveguide, such that a control signal pulse of a first pulse pair first interacts with the corresponding data signal pulse of the first pulse pair, and, after further propagation through the waveguide, interacts with the data signal pulse of the subsequent second pulse pair, and/or a data signal pulse of a first pulse pair first interacts with the corresponding control signal pulse of the first pulse pair, and, after transformation (by the generation of the acoustic wave via the SBS process) and further propagation through the waveguide, interacts with the control signal pulse of the subsequent second pulse pair. This way, a more complex system containing the desired recurrent operation may be implemented, in particular (but not limited thereto), in combination with the aforementioned detuning of at least one of the pulse pairs.

The invention furthermore discloses a RONN comprising the apparatus for implementing at least a first recurrent unit of a recurrent optical neural network as described above, and/or comprising a recurrent unit implemented by the apparatus described above. Preferably, said RONN is implemented as an integrated design on a single chip. Most preferably, said RONN comprises an Erbium-Doped Fiber Amplifier (EDFA). In particular, the RONN comprises means for generating, preferably at an input layer, subsequent pairs of laser pulses as described above, wherein the processing element comprises means for retrieving said subsequent pairs of laser pulses, e.g., at an inner layer (although this shall not constitute any limitation). Preferably, the RONN comprises a plurality of optical processing elements, each implementing a recurrent unit as described above.

The RONN according to the invention shares the advantages of the aforementioned method and apparatus for implementing at least a first recurrent unit of a RONN. The features, favorable embodiments and their specific assets of said method and apparatus for implementing at least a first recurrent unit of a RONN, may be directly transferred, mutatis mutandis, to the RONN itself. The attributes and properties as well as the advantages of the invention which have been described above are now illustrated with help of drawings of embodiment examples. In detail,
- figure 1: shows snapshots at four different times of a schematic signal flow of a method for implementing a recurrent unit of a RONN,
- figure 2: shows a schematic block diagram of an apparatus for implementing a recurrent unit of a RONN comprising a processing element,
- figure 3: shows a schematic block diagram of a RONN comprising the processing element of figure 2.

Parts and variables corresponding to one another are provided with the same reference numerals in each case of occurrence for all figures.

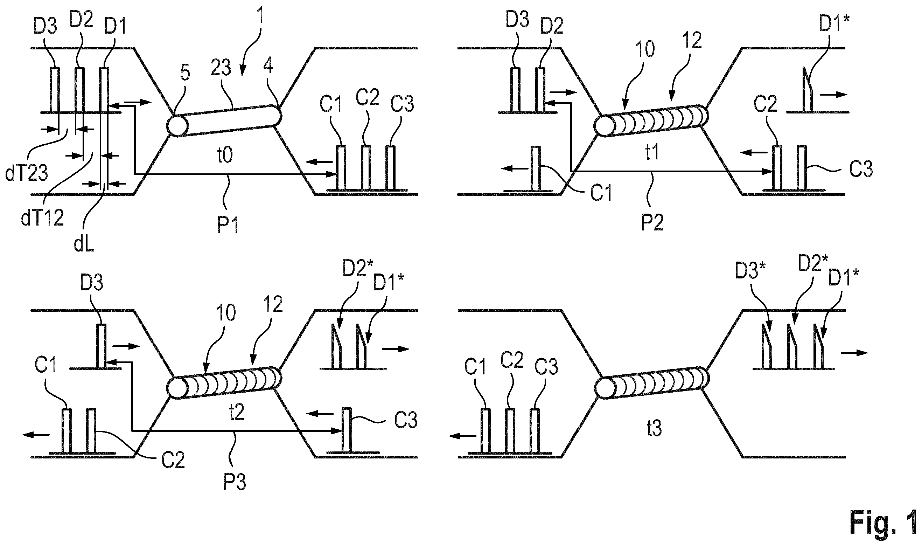

In Figure 1, a method for implementing a recurrent unit 1 of a RONN is displayed by snapshots at four different times of a schematic signal flow of said method. The snapshots are shown at times t0 (upper left corner), t1 (upper right corner), t2 (lower left corner) and t3 (lower right corner), with t0 < t1 < t2 < t3. The method employs an optical waveguide 2, which in the present case is given by an optical fiber 3. The fiber comprises a first ending 4 and a second ending 5.

For the method, subsequent pairs P1, P2, P3 of laser pulses, each of the pulse pairs P1-P3 consisting of a corresponding control signal pulse C1-C3 and a data signal pulse D1-D3, are counter-propagated through the optical fiber 3, i.e., a first control signal pulse C1 of a first pulse pair P1 is coupled into the first ending 4 of the optical fiber 3 and propagated towards its second ending 5, while a first data signal pulse D1 of the first pulse pair P1 is coupled into the second ending 5 of the optical fiber 3 and propagated towards the first ending 4. For the present embodiment example, each of the control signal pulses C1-C3 and data signal pulses D1-D3 shall have the same pulse length dL, though this is not a necessary requirement and might be relaxed for the mentioned pulses to have a pulse length in the same order of magnitude, preferably varying by a factor of at most 2 (i.e., max(dL) < 2 · min(dL), preferably). The first and the second pulse pair P1, P2, have a delay of dT12, i.e., the delay between the first data signal pulse D1 and a second data signal pulse D2 of the second pulse pair P2 is dT12, as is the delay between the first control signal pulse C1 and a second control signal pulse C2 of the second pulse pair P2. For the present embodiment, the pulse length dL shall be 500 ps, and the delay dT12 shall be 1.5 ns.

As it will be described in more detail below, an optical frequency ν_{d} of any of the data signal pulses D1-D3 (ν_{d} shall be the same for all data signal pulses D1-D3 in the present embodiment, although this condition could also be relaxed) is set to be the optical fiber's Brillouin frequency shift ν_{b} above an optical frequency v_{c} of any of the control signal pulses C1-C3 (which shall also be the same for all control signal pulses C1-C3 in the present embodiment, although this condition could also be relaxed), i.e., v_{d} = v_{c} + v_{b}. This frequency relation (within the spectral bandwidth of the Brillouin frequency shift ν_{b}) is a condition for obtaining a reliable and efficient SBS process. However, a small detuning as described above, may also be induced for at least several pulse pairs.

At the time t0 (i.e., upper left snapshot), the first control and data signal pulse C1, D1 of the first pulse pair P1 are coupled into their respective first and second ending 4, 5 of the optical fiber 3. As soon as the first data and control signal pulse D1, C1 meet inside the optical fiber 3, the SBS process transfers coherently optical energy of the data signal pulse D1 into an acoustic wave, generating an acoustic wave 10 inside the optical fiber 3. This acoustic wave 10 is localized in the optical fiber 3 and is quasi static in comparison to the laser pulses. Moreover, the acoustic wave 10 (i.e., the acoustic wave) decays exponentially with time, where the acoustic lifetime depends on material properties. In addition, the describes process is highly frequency selective process, which also allows for multi-frequency recurrent operations. Through the SBS process, the first data signal pulse D1 gets depleted and loses intensity, and thus gets transformed to a transformed first data signal pulse D1*, as it can be seen in the upper right snapshot, i.e., at time t1 (when the first control and data signal pulse C1, D1 have already propagated through the optical fiber 3). The first control signal pulse C1 does not experience any noticeable transformation from the propagation.

In the present case, the acoustic wave 10 has a decay time of about 10-12ns, such that due to the comparatively short delay dT12 between the first pulse pair P1 and the subsequent second pulse pair P2, the second control and data pulse C2, D2 are coupled into and counter-propagated trough the fiber (with respect to each other) while the acoustic wave 10 is still in the fiber. The second data signal pulse D2 does not only interact with the second control signal pulse C2 during its propagation through the optical fiber 3, but also with the acoustic wave 10 which carries optical information 12 stored by the first data signal pulse D1 (e.g., encoded in the phase and/or amplitude of the first data signal pulse D1). Thus, the acoustic wave 10 can serve as a memory for the optical information 12 of the first data signal pulse D1, and this optical information 12 can then interact with optical information encoded in the second data signal pulse D2 when the second pulse pair P2 is propagated through the optical fiber.

Upon propagation through the optical fiber 3 and interaction with the optical information 12 stored in the acoustic wave 10, the second data signal pulse D2 also gets depleted, and gets transformed to a transformed second data signal pulse D2*, while the second control signal pulse C2 does not experience any noticeable transformation from the propagation. This is shown in the lower left snapshot (t2). Note that the transformed second data signal pulse D2* depends on the first data signal pulse D1, i.e., D2* = D2* (D1).

Finally, at t3 also a third control signal pulse C3 and a third data signal pulse D3 of a third pulse pair P3 has been propagated through the optical fiber 3 with a delay of dT23 with respect to the previous second pulse pair P2 (here, dT23 shall be equal to dT12 = 1.5 ns). Again, the respective data signal pulse (here, the third data signal pulse D3) interacts with the acoustic wave 10 and the optical information 12 stored therein in advance by the previous first and second data signal pulses D1 and D2, and gets transformed by this interaction to a transformed third data signal pulse D3* = D3* (D2, D1), while the respective control signal pulse (here, the third control signal pulse C3) does not experience any noticeable transformation from the propagation (see time t3, i.e., lower right snapshot).

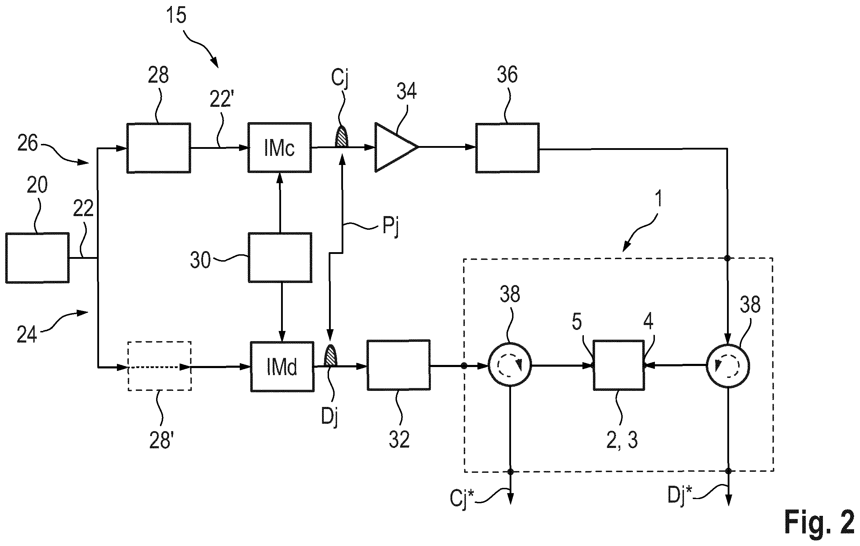

In Figure 2, a schematic block diagram of an apparatus 15 for implementing a recurrent unit of a RONN is shown. A laser device 20 is generating a continuous wave (CW) laser 22. The CW laser 22 is split into a data branch 24 and a control branch 26 via a beam splitter (not shown). For each pulse pair P1, P2, P3 as shown in Figure 1, the respective control signal pulse C1-C3 is prepared in the control branch 26 of the apparatus 15, and the respective data signal pulse D1-D3 is prepared in the data branch 24 of the apparatus 15. To this end, the optical frequency v_{cw} of the CW laser 22 in the control branch 26 is downshifted by the Brillouin frequency shift v_{b} of the waveguide 2 towards the resulting optical frequency v_{c} of the control signal pulse. Such a frequency shift can be realized with different methods, for instance with a high frequency radio-frequency (RF) source and an optical IQ-modulator 28. In this case, the optical frequency v_{cw} of the CW laser 22 is taken to be the optical frequency of the data signal pulse ν_{d}.

As an alternative, the optical frequency v_{cw} of the CW laser in the data branch 24 is upshifted by the Brillouin frequency shift v_{b} of the waveguide 2 towards the optical frequency v_{d} of the data signal pulse (dashed box 28' and dotted arrow). In that case, the optical frequency v_{cw} of the CW laser 22 is taken to be the optical frequency of the control signal pulse v_{c}. For a multi-frequency implementation of the recurrent unit 1, one may use a multi-tone RF-source to generate the required multi-tones and may add additional spectral filtering into the optical path to ensure a clean multi-tone optical spectrum.

Next, both the CW laser 22 in the data branch 24 and the down-shifted CW laser 22' in the control branch 26 are transformed to a synchronized sequence of pulses, generating thereby subsequent pulse pairs Pj (in the example shown in Figure 1, j = 1, 2, 3) via intensity modulators IMc, IMd driven by a RF-pulse generator 30. The individual control and data signal pulses Cj, Dj will contain information for later computational steps and can be separated by dead times, i.e., delays dTj,j+1 < Tac, being Tac the decay time of the acoustic wave in the fiber 3 that is used as the optical waveguide 2 for the SBS interaction. For instance, a second pulse pair P2 can be separated to a first pulse pair P1 by a dead time (delay) dT12 < Tac, while a third pulse pair P3 may be separated to the second pulse pair P2 by another dead time (delay) dT23, dT23 ≠ dT12, or by the same dead time (delay) dT23 = dT12.

In practical implementations, the RF-pulse generator 30 preferably comprises two independent but synchronized outputs to drive the intensity modulators IMc, IMd. The independence is important in order to match the data-control interaction in the waveguide 2 and to possibly compensate for different optical pathlengths in the data and control branch 24, 26. The synchronization of the outputs of the intensity modulators IMc, IMd to a common frequency reference given by the RF-pulse generator 30 helps ensuring an equal behavior of the control and data signal pulses in the frequency domain. Note that in an alternative embodiment (not shown), this could also be realized with two RF-sources set up in a lead and follow configuration. Moreover, the pulses generated with help of the RF-pulse generator 30 and the respective intensity modulator IMc, IMd, may have any envelope shape, whereas a rectangular shape proves as the most suitable. The so generated data and control signal pulses Dj, Cj do not necessarily have the same pulse width; however, a better SBS efficiency is achieved if the control signal pulses Cj have the same or a shorter pulse width as the corresponding data signal pulse Dj. Likewise, the control signal pulses Cj shall have an optical power of preferably 10-20 dB above the optical power of the corresponding data signal pulse Dj, in order to ensure a high SBS process efficiency.

Next, the prepared data signal pulse Dj can now be guided into an optical data processor unit 32 such as an ONN, where it gets manipulated in amplitude and/or phase in order to encode the optical information to be transferred to the acoustic wave 10 of Figure 1 by means of the SBS process. As an alternative (not shown), the information encoding may also be performed at an earlier stage by the intensity modulator IMd (and/or possibly the optical IQ-modulator 28' of the data branch 24). The control signal pulses Cj are guided into a high-power Erbium-Doped Fiber Amplifier (EDFA) 34, a 1nm-bandpass filter 36 and into a polarization controller (not shown). The bandpass filter 36 reduces an amplified noise introduced by an amplified spontaneous emission (ASE) of the EDFA 34.

Finally, both the control signal pulse Cj and the data signal pulse Dj are coupled into their corresponding first and second ending 4, 5 of the waveguide 2 (with help of optical circulators 38 for separating the incoming signal pulses from a counterpropagating outgoing signal pulse that has left the waveguide) at the same time. They induce an SBS process as soon as they interact in the waveguide 2. It is important to note that there would be no interaction between data and control signal pulse Dj, Cj outside the waveguide 2 since the frequency detuning of control and data signal pulse is set exclusively to the Brillouin frequency shift νb of the waveguide 2. The optical circulators 38 give not only access to the post-SBS, transformed data signal pulse Dj*, but also to the post-SBS control signal pulse Cj, which may be then re-used for another interaction (not shown).

In addition, for a simple implementation of the recurrent unit 1, the length of the waveguide 2 should be chosen so that the data signal pulse Dj interacts only with its corresponding control signal pulse Cj, and not with any other control signal pulse Ck, k ≠ j. For more complex optical manipulations, such as one data signal pulse interacting with more than one control signal pulse during the propagation through the waveguide, the length of the waveguide 2 might be increased to induce several but spatially separated SBS processes.

One possible application of the recurrent unit 1 is in optical neural networks (ONNs) as it may directly promote "traditional" neurons (without any memory) to recurrent neurons. The output of a module of output neurons may be fed (on-chip) into a recurrent unit with synchronized recurrent neurons. The synchronization of the individual recurrent neurons enables to recycle a single control signal pulse for multiple recurrent neurons. Therefore, each recurrent neuron should have a delay line to ensure that the control pulse arrives at the next recurrent neuron at the same time as the input of the corresponding recurrent neuron. This means that the required synchronization for the use of only one control signal pulse in different recurrent neurons (i.e., different recurrent units) is provided by the control signal pulse itself. As an alternative, the delays in different input paths towards the individual recurrent neurons may be matched to the propagation time of a control signal pulse. By means of this synchronization via the data signal pulses, no control signal pulse delay is required. In a multi-frequency implementation, the control signal pulse also contains several frequency components, each dictating the strength of the individual SBS process in each frequency channel. After a recurrent neuron's input is processed by SBS and the recurrent neuron's internal nonlinear activation function (NLA), it can be passed to the next layer of the network.

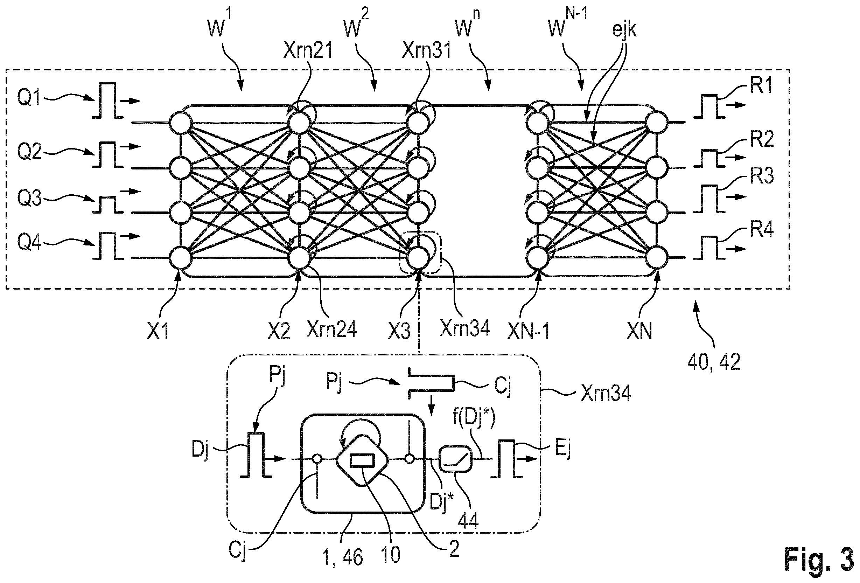

Figure 3 schematically shows a block diagram of a RONN 40, which is implemented on a single photonic chip 42 The RONN 40 comprises N layers X1, ..., XN, which are connected by respective edges ejk, each set of edges ejk between two subsequent layers Xk, Xk+1 (k= 1, ..., N-1) being represented by a matrix operation Wk (the matrix Wk containing the respective weights for propagating the information from the layer Xk to the layer Xk+1). Optical information in the form of laser pulses Q1-Q4 is input to the input layer X1, and propagated along the edges ejk through the RONN 40 towards the output layer XN, where the propagated optical information, processed by the RONN, is retrieved as output pulses R1-R4. It shall be noted that the number of input pulses Q1-Q4 and/or of the output pulses R1-R4 can be different than four (especially, more than four), and in particular, the number of input pulses Q1-Q4 and of the output pulses R1-R4 may be different from each other.

The input pulses Q1-Q4 can be generated from one or more laser devices (see the laser device 20 in figure 2) located on the photonic chip 42, or one or more of the input pulses Q1-Q4 may be fed into the photonic chip 42 from the outside, possibly after passing through a previous optical processing operation. The output pulses R1-R4 may be measured (e.g., by a direct measurement using photodiodes located on the photonic chip 42, or by a homodyne or heterodyne measurement using a local oscillator) in order to access the information content encoded therein, and to convert it into an electric signal, or one or more of the output pulses R1-R4 may be forward to further optical processing operations, being possibly performed outside of the photonic chip 42.

In the embodiment shown in Figure 3, the inner layers X2...XN-1 comprise recurrent nodes Xrn21-Xrn24, Xrn31-Xrn34. Different embodiments are possible, in which not all nodes of the inner layers are implemented as recurrent nodes. The recurrent node Xrn34 of the third layer X3 is shown in the highlighted image section. The recurrent node Xrn34 contains a recurrent unit 1 (see Figure 2) and an activation function 44. The recurrent unit 1 is implemented by means of a processing element 46 for the RONN 42. The processing element 46 comprises an optical waveguide 2 (see Figure 2), and is configured to perform the recurrent operation described above, retrieving from the previous layer X2, via different edges ejk, the pulse pairs Pj consisting of the control signal pulses Cj and the data signal pulses Dj, thereby generating the corresponding acoustic wave 10 inside the optical waveguide 2. The recurrent operation implemented by the recurrent unit 1 results in a transformation of the data signal pulse Dj towards Dj*-in dependence on the information from previous data signal pulses Dj-1, Dj-2 etc. (not shown) that had been stored in the acoustic wave via the corresponding control signal pulses Cj-1, Cj-2 etc. The transformed data signal pulse Dj* is then processed by the activation function 44 (i.e., by its physical implementation), yielding a node output Ej as a function f(Dj*) of the transformed data signal pulse Dj*.

The other output of the processing element 46 is given by the control signal pulse Cj. This control signal pulse Cj may be dumped, or can also be used as an input into another recurrent node, e.g., into Xrn31.

Even though the invention has been illustrated and described in detail with help of a preferred embodiment example, the invention is not restricted by this example. Other variations can be derived by a person skilled in the art without leaving the extent of protection of this invention.

### Reference numeral

- 1: recurrent unit
- 2: optical waveguide
- 3: optical fiber
- 4: first ending
- 5: second ending
- 10: acoustic wave
- 12: optical information
- 15: apparatus
- 20: laser device
- 22: CW laser
- 22: downshifted CW laser
- 24: data branch
- 26: control branch
- 28('): optical IQ-modulator
- 30: RF-pulse generator
- 32: optical data processor unit
- 34: Erbium-Doped Fiber Amplifier (EDFA)
- 36: bandpass filter
- 38: optical circulator
- 40: recurrent optical neural network (RONN)
- 42: photonic chip
- 44: activation function
- 46: (optical) processing element

- C1-C3: first to third control signal pulse
- Cj: control signal pulse (of pulse pair Pj)
- D1-D3: first to third data signal pulse
- D1*-D3*: transformed first to third data signal pulse
- Dj: data signal pulse (of pulse pair Pj)
- dL: pulse length
- dT12/23: delay time
- Ej: node output
- f(Dj*): function of the transformed data signal pulse
- IMc/d: intensity modulator
- P1-P3: first to third pulse pair
- Pj: pulse pair
- Q1-Q4: input pulses
- R1-R4: output pulses
- t0-t3: snapshot times
- W1-WN-1: matrix operation/edges (between the layers)
- X1-XN: layers (of the RONN)
- Xrn21-34: recurrent nodes

## Claims

1. A method for implementing at least a first recurrent unit (1) of a recurrent optical neural network (40) by means of an optical waveguide (2),
wherein subsequent laser pulse pairs (P1-P3), each pair (P1-P3) consisting of a control signal pulse (C1-C3) and a data signal pulse (D1-D3), are counter-propagated through said waveguide (2) in a way such that for a given pulse pair (P1-P3),
- the control signal pulse (C1-C3) is coupled into a first ending (4) of the waveguide (2) and propagated towards a second ending (5) of the waveguide (2), and
- the data signal pulse (D1-D3) is coupled into said second ending (5) of the waveguide (2) and propagated towards said first ending (4) of the waveguide (2),
wherein for a given pulse pair (P1-P3),
- an optical frequency of the data signal pulse (D1-D3) is set to be within a bandwidth of a Brillouin frequency shift of the waveguide (2) above an optical frequency of the control signal pulse (C1-C3) of the same pulse pair (P1-P3), and/or
- a difference between an optical frequency of the data signal pulse (D1-D3) and a sum of an optical frequency of the control signal pulse (C1-C3) of the same pulse pair (P1-P3) and a Brillouin frequency shift, is set to be within a bandwidth of said Brillouin frequency shift, and
wherein a time delay (dT12, dT23) between a first pulse pair (P1) and a subsequent second pulse pair (P2) is set to be less than a decay time of an acoustic wave (10) generated by a stimulated Brillouin scattering process in the waveguide (2), such that by propagating a second data signal pulse (D2) of the second pulse pair (P2) through the waveguide (2), a dependence of said second data signal pulse (D2) on a first data signal pulse (D1) of the first pulse pair (P2) is induced via a first acoustic wave (10) generated by a stimulated Brillouin scattering process.

2. The method according to claim 1,
wherein for a given pulse pair (P1-P3), a strength of an interaction between the corresponding control signal pulse (C1-C3) and data signal pulse (D1-D3) for generating an acoustic wave (10) by a stimulated Brillouin scattering process, is controlled by an amplitude and/or an envelope and/or an optical power of the control signal pulse (C1-C3).

3. The method according to claim 1 or claim 2,
wherein for each pulse pair (P1-P3),
- an optical power of the control signal pulse (C1-C3) is at least 10 dB higher than an optical power of the data signal pulse (D1-D3), and/or
- an optical power of the control signal pulse (C1-C3) is varied by at most +/-10 dB for controlling the strength of an interaction between the control signal pulse (C1-C3) and the data signal pulse (D1-D3).

4. The method according to any of the preceding claims,
wherein for each pulse pair (P1-P3), an information is encoded into a phase and/or an amplitude of the corresponding data signal pulse (D1-D3).

5. The method according to any of the preceding claims,
wherein for a given pulse pair (P1-P3), said difference between an optical frequency of the data signal pulse (D1-D3) and a sum of an optical frequency of the control signal pulse (C1-C3) of the same pulse pair (P1-P3) and a Brillouin frequency shift is set to match the Brillouin frequency shift.

6. The method according to any of the preceding claims,
wherein for at least one given pulse pair (P1-P3), said difference between an optical frequency of the data signal pulse (D1-D3) and a sum of an optical frequency of the control signal pulse (C1-C3) of the same pulse pair (P1-P3) and a Brillouin frequency shift is set to be different from the Brillouin frequency shift.

7. The method according to any of the preceding claims,
wherein sets of subsequent pulse pairs (P1-P3) are prepared in different optical frequency bands, each frequency band enclosing a different set of subsequent pulse pairs (P1-P3),
wherein for each frequency band, the difference between the optical frequencies of the control signal pulse (C1-C3) and the data signal pulse (D1-D3) of the corresponding pulse pair (P1-P3) in the frequency band is set within a bandwidth of a Brillouin frequency shift of the waveguide (2), in order to implement a plurality of parallel recurrent units (1) in frequency domain.

8. The method according to claim 7,
wherein a bandwidth of said optical frequency bands, given by a difference of two adjacent control signal pulse frequencies and/or two adjacent data signal pulse frequencies, is set in dependence on the Brillouin frequency shift in the waveguide (2) and/or a pulse width of a control signal pulse (C1-C3) and/or a data signal pulse (D1-D3) of the pulse pairs (P1-P3), respectively.

9. The method according to any of the preceding claims,
wherein a pulse length (dL) for a control signal pulse (C1-C3) and/or a data signal pulse (D1-D3) is set to be at least 10 ps, and/or
wherein a time delay (dT12, dT23) between two subsequent pulse pairs is set in dependence on a decay time of an acoustic wave (10) in the waveguide (2).

10. The method according to any of the preceding claims,
wherein an optical fiber (3) is used as said waveguide (2).

11. The method according to claim 10,
wherein a polarization preserving fiber is used as said waveguide (2).

12. The method according to claim 11,
wherein the first pulse pair (P1) with the respective first control signal pulse (C1) and first data signal pulse (D1) is prepared in one of the two preserved polarizations,
wherein by means of a sole control signal pulse (C1-C3) without a corresponding data signal pulse (D1-D3), a reset operation is performed on the at least one recurrent unit (1) by erasing the acoustic wave (10) in the waveguide (2), and wherein the reset operation is performed by a control signal pulse in the other preserved polarization.

13. An apparatus (15) for implementing at least a first recurrent unit (1) of a recurrent optical neural network, comprising:
- an optical processing element (46) including an optical waveguide (2),
- means for generating subsequent pairs (P1-P3) of laser pulses, each pair (P1-P3) consisting of a control signal pulse (C1-C3) and a data signal pulse (D1-D3), wherein said means for generating the pulse pairs (P1-P3) are configured to set an optical frequency of the data signal pulse (D1-D3) of a pulse pair (P1-P3) to be within a bandwidth of a Brillouin frequency shift of the waveguide above an optical frequency of the control signal pulse (C1-C3) of the same pulse pair (P1-P3), and/or to set a difference between an optical frequency of the data signal pulse (D1-D3) and a sum of an optical frequency of the control signal pulse (C1-C3) of the same pulse pair (P1-P3) and a Brillouin frequency shift, is set to be within a bandwidth of said Brillouin frequency shift,
- means for coupling in the control signal pulses (C1-C3) of subsequent pulse pairs (P1-P3) into a first ending (4) of said waveguide (2), and means for coupling in the data signal pulses (D1-D3) into a second ending (5) of said waveguide (2), wherein the apparatus (15) is configured to set a time delay (dT12, dT23) between a first pulse pair (P1) and a subsequent second pulse pair (P2) to be less than a decay time of an acoustic wave (10) generated by a stimulated Brillouin scattering in the waveguide (2), such that by propagating a second data signal pulse (D2) of the second pulse pair (P2) through the waveguide (2), a dependence of said second data signal pulse (D2) on a first data signal pulse (D1) of the first pulse pair (D1) is induced via a first acoustic wave (10) generated by a stimulated Brillouin scattering process.

14. The apparatus (15) according to claim 13,
wherein a length of said optical waveguide (2) is chosen, in dependence on said time delay (dT12, dT23) and/or said decay time of an acoustic wave (10) generated by a stimulated Brillouin scattering in the waveguide (2), such that
- a control signal pulse (C1) of a first pulse pair (P1) first interacts with the corresponding data signal pulse (D1) of the first pulse pair (P1), and, after further propagation through the waveguide (2), interacts with the data signal pulse (D2) of the subsequent second pulse pair (P2), and/or
- a data signal pulse (D1) of a first pulse pair (P1) first interacts with the corresponding control signal pulse (C1) of the first pulse pair (P1), and, after transformation and further propagation through the waveguide (2), interacts with the control signal pulse (C2) of the subsequent second pulse pair (P2).

15. A recurrent optical neuronal network, comprising the apparatus (15) according to claim 13 or claim 14.

## Patentansprüche

1. Verfahren zum Implementieren wenigstens einer ersten rekurrenten Einheit (1) eines rekurrenten optischen neuronalen Netzes (40) mittels eines optischen Wellenleiters (2), wobei aufeinanderfolgende Laserimpulspaare (P1-P3), von denen jedes Paar (P1-P3) aus einem Steuersignalimpuls (C1-C3) und einem Datensignalimpuls (D1-D3) besteht, gegenläufig durch den Wellenleiter (2) derart propagiert werden, dass für ein gegebenes Impulspaar (P1-P3)
- der Steuersignalimpuls (C1-C3) in ein erstes Ende (4) des Wellenleiters (2) eingekoppelt und zu einem zweiten Ende (5) des Wellenleiters (2) propagiert wird, und
- der Datensignalimpuls (D1-D3) in das zweite Ende (5) des Wellenleiters (2) eingekoppelt und zu dem ersten Ende (4) des Wellenleiters (2) propagiert wird,
wobei für ein gegebenes Impulspaar (P1-P3)
- eine optische Frequenz des Datensignalimpulses (D1-D3) so eingestellt wird, dass sie innerhalb einer Bandbreite einer Brillouin-Frequenzverschiebung des Wellenleiters (2) oberhalb einer optischen Frequenz des Steuersignalimpulses (C1-C3) desselben Impulspaares (P1-P3) liegt, und/oder
- eine Differenz zwischen einer optischen Frequenz des Datensignalimpulses (D1-D3) und einer Summe einer optischen Frequenz des Steuersignalimpulses (C1-C3) desselben Impulspaars (P1-P3) und einer Brillouin-Frequenzverschiebung so eingestellt wird, dass sie innerhalb einer Bandbreite der Brillouin-Frequenzverschiebung liegt, und
wobei eine Zeitverzögerung (dT12, dT23) zwischen einem ersten Impulspaar (P1) und einem darauffolgenden zweiten Impulspaar (P2) so eingestellt wird, dass sie kleiner als eine Abklingzeit einer akustischen Welle (10) ist, die durch einen stimulierten Brillouin-Streuprozess in dem Wellenleiter (2) erzeugt wird, so dass durch Propagieren eines zweiten Datensignalimpulses (D2) des zweiten Impulspaars (P2) durch den Wellenleiter (2) eine Abhängigkeit dieses zweiten Datensignalimpulses (D2) von einem ersten Datensignalimpuls (D1) des ersten Impulspaares (P2) über eine erste akustische Welle (10) induziert wird, welche durch einen stimulierten Brillouin-Streuprozess erzeugt wird.

2. Verfahren nach Anspruch 1,
wobei für ein gegebenes Impulspaar (P1-P3) eine Stärke einer Wechselwirkung zwischen dem entsprechenden Steuersignalimpuls (C1-C3) und Datensignalimpuls (D1-D3) zum Erzeugen einer akustischen Welle (10) durch einen stimulierten Brillouin-Streuprozess durch eine Amplitude und/oder eine Hüllkurve und/oder eine optische Leistung des Steuersignalimpulses (C1-C3) gesteuert wird.

3. Verfahren nach Anspruch 1 oder Anspruch 2,
wobei für jedes Impulspaar (P1-P3)
- eine optische Leistung des Steuersignalimpulses (C1-C3) wenigstens 10 dB höher als eine optische Leistung des Datensignalimpulses (D1-D3) ist, und/oder
- eine optische Leistung des Steuersignalimpulses (C1-C3) zum Steuern der Stärke einer Wechselwirkung zwischen dem Steuersignalimpuls (C1-C3) und dem Datensignalimpuls (D1-D3) um höchstens +/-10 dB variiert wird.

4. Verfahren nach einem der vorhergehenden Ansprüche, wobei für jedes Impulspaar (P1-P3) eine Information in eine Phase und/oder eine Amplitude des entsprechenden Datensignalimpulses (D1-D3) codiert wird.

5. Verfahren nach einem der vorhergehenden Ansprüche, wobei für ein gegebenes Impulspaar (P1-P3) eine Differenz zwischen einer optischen Frequenz des Datensignalimpulses (D1-D3) und einer Summe einer optischen Frequenz des Steuersignalimpulses (C1-C3) desselben Impulspaars (P1-P3) und einer Brillouin-Frequenzverschiebung so eingestellt wird, dass sie mit der Brillouin-Frequenzverschiebung übereinstimmt.

6. Verfahren nach einem der vorhergehenden Ansprüche, wobei für wenigstens ein gegebenes Impulspaar (P1-P3) eine Differenz zwischen einer optischen Frequenz des Datensignalimpulses (D1-D3) und einer Summe einer optischen Frequenz des Steuersignalimpulses (C1-C3) desselben Impulspaars (P1-P3) und einer Brillouin-Frequenzverschiebung so eingestellt wird, dass sie sich von der Brillouin-Frequenzverschiebung unterscheidet.

7. Verfahren nach einem der vorhergehenden Ansprüche, wobei Sätze von aufeinanderfolgenden Impulspaaren (P1-P3) in verschiedenen optischen Frequenzbändern vorbereitet werden, wobei jedes Frequenzband einen anderen Satz von aufeinanderfolgenden Impulspaaren (P1-P3) einschließt,
wobei für jedes Frequenzband die Differenz zwischen den optischen Frequenzen des Steuersignalimpulses (C1-C3) und dem Datensignalimpuls (D1-D3) des entsprechenden Impulspaars (P1-P3) in dem Frequenzband innerhalb einer Bandbreite einer Brillouin-Frequenzverschiebung des Wellenleiters (2) eingestellt wird, um mehrere parallele rekurrente Einheiten (1) in einer Frequenzdomäne zu implementieren.

8. Verfahren nach Anspruch 7,
wobei eine Bandbreite der optischen Frequenzbänder, die durch eine Differenz von zwei angrenzenden Steuersignalimpulsfrequenzen und/oder zwei angrenzenden Datensignalimpulsfrequenzen gegeben wird, jeweils in Abhängigkeit von der Brillouin-Frequenzverschiebung in dem Wellenleiter (2) und/oder einer Impulsbreite eines Steuersignalimpulses (C1-C3) und/oder eines Datensignalimpulses (D1-D3) der Impulspaare (P1-P3) eingestellt wird.

9. Verfahren nach einem der vorhergehenden Ansprüche, wobei eine Impulslänge (dL) für einen Steuersignalimpuls (C1-C3) und/oder einen Datensignalimpuls (D1-D3) auf wenigstens 10 ps eingestellt wird, und/oder wobei eine Zeitverzögerung (dT12, dT23) zwischen zwei aufeinanderfolgenden Impulspaaren in Abhängigkeit von einer Abklingzeit einer akustischen Welle (10) in dem Wellenleiter (2) eingestellt wird.

10. Verfahren nach einem der vorhergehenden Ansprüche, wobei eine optische Faser (3) als der Wellenleiter (2) verwendet wird.

11. Verfahren nach Anspruch 10,
wobei eine polarisationsbeibehaltende Faser als der Wellenleiter (2) verwendet wird.

12. Verfahren nach Anspruch 11,
wobei das erste Impulspaar (P1) mit dem jeweiligen ersten Steuersignalimpuls (C1) und dem ersten Datensignalimpuls (D1) in einer der zwei beibehaltenen Polarisationen vorbereitet wird,
wobei mittels eines einzigen Steuersignalimpulses (C1-C3) ohne einen entsprechenden Datensignalimpuls (D1-D3) eine Rücksetzoperation an der wenigstens einen rekurrenten Einheit (1) durch Auslöschen der akustischen Welle (10) in dem Wellenleiter (2) durchgeführt wird, und wobei die Rücksetzoperation durch einen Steuersignalimpuls in der anderen beibehaltenen Polarisation durchgeführt wird.

13. Einrichtung (15) zum Implementieren wenigstens einer ersten rekurrenten Einheit (1) eines rekurrenten optischen neuronalen Netzes, die Folgendes umfasst:
- ein optisches Verarbeitungselement (46), das einen optischen Wellenleiter (2) beinhaltet,
- Mittel zum Erzeugen aufeinanderfolgender Paare (P1-P3) von Laserimpulsen, wobei jedes Paar (P1-P3) aus einem Steuersignalimpuls (C1-C3) und einem Datensignalimpuls (D1-D3) besteht, wobei die Mittel zum Erzeugen der Impulspaare (P1-P3) dazu ausgelegt sind, eine optische Frequenz des Datensignalimpulses (D1-D3) eines Impulspaars (P1-P3) so einzustellen, dass sie innerhalb einer Bandbreite einer Brillouin-Frequenzverschiebung des Wellenleiters oberhalb einer optischen Frequenz des Steuersignalimpulses (C1-C3) desselben Impulspaars (P1-P3) liegt, und/oder eine Differenz zwischen einer optischen Frequenz des Datensignalimpulses (D1-D3) und einer Summe einer optischen Frequenz des Steuersignalimpulses (C1-C3) desselben Impulspaars (P1-P3) und einer Brillouin-Frequenzverschiebung so einzustellen, dass sie innerhalb einer Bandbreite der Brillouin-Frequenzverschiebung liegt,
- Mittel zum Einkoppeln der Steuersignalimpulse (C1-C3) von nachfolgenden Impulspaaren (P1-P3) in ein erstes Ende (4) des Wellenleiters (2) und Mittel zum Einkoppeln der Datensignalimpulse (D1-D3) in ein zweites Ende (5) des Wellenleiters (2), wobei die Vorrichtung (15) konfiguriert ist zum Einstellen einer Zeitverzögerung (dT12, dT23) zwischen einem ersten Impulspaar (P1) und einem nachfolgenden zweiten Impulspaar (P2), so dass sie kleiner als eine Abklingzeit einer akustischen Welle (10) ist, die durch eine stimulierte Brillouin-Streuung in dem Wellenleiter (2) erzeugt wird, so dass durch Ausbreiten eines zweiten Datensignalimpulses (D2) des zweiten Impulspaars (P2) durch den Wellenleiter (2), eine Abhängigkeit dieses zweiten Datensignalimpulses (D2) von einem ersten Datensignalimpuls (D1) des ersten Impulspaares (D1) wird über eine durch einen stimulierten Brillouin-Streuvorgang erzeugte erste akustische Welle (10) induziert.

14. Einrichtung (15) nach Anspruch 13,
wobei eine Länge des optischen Wellenleiters (2) in Abhängigkeit von der Zeitverzögerung (dT12, dT23) und/oder der Abklingzeit einer akustischen Welle (10), die durch eine stimulierte Brillouin-Streuung in dem Wellenleiter (2) erzeugt wird, derart gewählt wird, dass
- ein Steuersignalimpuls (C1) eines ersten Impulspaares (P1) zuerst mit dem entsprechenden Datensignalimpuls (D1) des ersten Impulspaares (P1) wechselwirkt und nach weiterer Propagation durch den Wellenleiter (2) mit dem Datensignalimpuls (D2) des darauffolgenden zweiten Impulspaares (P2) wechselwirkt, und/oder
- ein Datensignalimpuls (D1) eines ersten Impulspaares (P1) zuerst mit dem entsprechenden Steuersignalimpuls (C1) des ersten Impulspaares (P1) wechselwirkt und nach einer Transformation und weiteren Propagation durch den Wellenleiter (2) mit dem Steuersignalimpuls (C2) des darauffolgenden zweiten Impulspaares (P2) wechselwirkt.

15. Rekurrentes optisches neuronales Netz, das die Einrichtung (15) nach Anspruch 13 oder Anspruch 14 umfasst.

## Revendications

1. Procédé de mise en œuvre d'au moins une première unité récurrente (1) d'un réseau neuronal optique récurrent (40) au moyen d'un guide d'ondes optique (2), dans lequel des paires d'impulsions laser ultérieures (P1-P3), chaque paire (P1-P3) étant constituée d'une impulsion de signal de commande (C1-C3) et d'une impulsion de signal de données (D1-D3), sont rétropropagées à travers ledit guide d'ondes (2) de telle sorte que, pour une paire d'impulsions (P1-P3) donnée,
- l'impulsion de signal de commande (C1-C3) est couplée dans une première extrémité (4) du guide d'ondes (2) et propagée vers une seconde extrémité (5) du guide d'ondes (2), et
- l'impulsion de signal de données (D1-D3) est couplée dans ladite seconde extrémité (5) du guide d'ondes (2) et propagée vers ladite première extrémité (4) du guide d'ondes (2),
dans lequel, pour une paire d'impulsions donnée (P1-P3),
- une fréquence optique de l'impulsion de signal de données (D1-D3) est réglée de façon à être dans une bande passante d'un décalage de fréquence de Brillouin du guide d'ondes (2) au-dessus d'une fréquence optique de l'impulsion de signal de commande (C1-C3) de la même paire d'impulsions (P1-P3), et/ou
- une différence entre une fréquence optique de l'impulsion de signal de données (D1-D3) et une somme d'une fréquence optique de l'impulsion de signal de commande (C1-C3) de la même paire d'impulsions (P1-P3) et d'un décalage de fréquence de Brillouin, est réglée de façon à être dans une bande passante dudit décalage de fréquence de Brillouin, et
dans lequel un retard temporel (dT12, dT23) entre une première paire d'impulsions (P1) et une seconde paire d'impulsions ultérieure (P2) est réglé de façon à être inférieur à un temps de décroissance d'une onde acoustique (10) générée par un processus de diffusion de Brillouin stimulée dans le guide d'ondes (2), de telle sorte qu'en propageant une seconde impulsion de signal de données (D2) de la seconde paire d'impulsions (P2) à travers le guide d'ondes (2), une dépendance de ladite seconde impulsion de signal de données (D2) vis-à-vis d'une première impulsion de signal de données (D1) de la première paire d'impulsions (P2) est induite par l'intermédiaire d'une première onde acoustique (10) générée par un processus de diffusion de Brillouin stimulée.

2. Procédé selon la revendication 1,
dans lequel, pour une paire d'impulsions donnée (P1-P3), une intensité d'une interaction entre l'impulsion de signal de commande (C1-C3) et l'impulsion de signal de données (D1-D3) correspondantes pour générer une onde acoustique (10) par un processus de diffusion de Brillouin stimulée, est commandée par une amplitude et/ou une enveloppe et/ou une puissance optique de l'impulsion de signal de commande (C1-C3).

3. Procédé selon la revendication 1 ou la revendication 2,
dans lequel, pour chaque paire d'impulsions (P1-P3),
- une puissance optique de l'impulsion de signal de commande (C1-C3) est supérieure d'au moins 10 dB à une puissance optique de l'impulsion de signal de données (D1-D3), et/ou
- une puissance optique de l'impulsion de signal de commande (C1-C3) est amenée à varier d'au plus +/-10 dB pour commander l'intensité d'une interaction entre l'impulsion de signal de commande (C1-C3) et l'impulsion de signal de données (D1-D3).

4. Procédé selon l'une quelconque des revendications précédentes,
dans lequel, pour chaque paire d'impulsions (P1-P3), une information est codée dans une phase et/ou une amplitude de l'impulsion de signal de données (D1-D3) correspondante.

5. Procédé selon l'une quelconque des revendications précédentes,
dans lequel, pour une paire d'impulsions donnée (P1-P3), ladite différence entre une fréquence optique de l'impulsion de signal de données (D1-D3) et une somme d'une fréquence optique de l'impulsion de signal de commande (C1-C3) de la même paire d'impulsions (P1-P3) et d'un décalage de fréquence de Brillouin est réglée de façon à correspondre au décalage de fréquence de Brillouin.

6. Procédé selon l'une quelconque des revendications précédentes,
dans lequel, pour au moins une paire d'impulsions donnée (P1-P3), ladite différence entre une fréquence optique de l'impulsion de signal de données (D1-D3) et une somme d'une fréquence optique de l'impulsion de signal de commande (C1-C3) de la même paire d'impulsions (P1-P3) et d'un décalage de fréquence de Brillouin est réglée de façon à être différente du décalage de fréquence de Brillouin.

7. Procédé selon l'une quelconque des revendications précédentes,
dans lequel des ensembles de paires d'impulsions ultérieures (P1-P3) sont préparés dans des bandes de fréquences optiques différentes, chaque bande de fréquence renfermant un ensemble différent de paires d'impulsions ultérieures (P1-P3),
dans lequel, pour chaque bande de fréquence, la différence entre les fréquences optiques de l'impulsion de signal de commande (C1-C3) et de l'impulsion de signal de données (D1-D3) de la paire d'impulsions (P1-P3) correspondante dans la bande de fréquence est réglée de façon à être dans une bande passante d'un décalage de fréquence de Brillouin du guide d'ondes (2), afin de mettre en œuvre une pluralité d'unités récurrentes parallèles (1) dans le domaine fréquentiel.

8. Procédé selon la revendication 7,
dans lequel une bande passante desdites bandes de fréquences optiques, donnée par une différence de deux fréquences d'impulsions de signal de commande adjacentes et/ou de deux fréquences d'impulsions de signal de données adjacentes, est réglée en fonction du décalage de fréquence de Brillouin dans le guide d'ondes (2) et/ou d'une largeur d'impulsion d'une impulsion de signal de commande (C1-C3) et/ou d'une impulsion de signal de données (D1-D3) des paires d'impulsions (P1-P3), respectivement.

9. Procédé selon l'une quelconque des revendications précédentes,
dans lequel une longueur d'impulsion (dL) pour une impulsion de signal de commande (C1-C3) et/ou une impulsion de signal de données (D1-D3) est réglée de façon à être d'au moins 10 ps, et/ou
dans lequel un retard temporel (dT12, dT23) entre deux paires d'impulsions ultérieures est réglé en fonction d'un temps de décroissance d'une onde acoustique (10) dans le guide d'ondes (2).

10. Procédé selon l'une quelconque des revendications précédentes,
dans lequel une fibre optique (3) est utilisée en tant que ledit guide d'ondes (2).

11. Procédé selon la revendication 10,
dans lequel une fibre conservant la polarisation est utilisée en tant que ledit guide d'ondes (2).

12. Procédé selon la revendication 11,
dans lequel la première paire d'impulsions (P1) comprenant la première impulsion de signal de commande (C1) et la première impulsion de signal de données (D1) respectives est préparée dans l'une des deux polarisations conservées,
dans lequel, au moyen d'une seule impulsion de signal de commande (C1-C3) sans impulsion de signal de données (D1-D3) correspondante, une opération de réinitialisation est réalisée sur l'au moins une unité récurrente (1) par effacement de l'onde acoustique (10) dans le guide d'ondes (2), et dans lequel l'opération de réinitialisation est réalisée par une impulsion de signal de commande dans l'autre polarisation conservée.

13. Appareil (15) de mise en œuvre d'au moins une première unité récurrente (1) d'un réseau neuronal optique récurrent, comprenant :
- un élément de traitement optique (46) comportant un guide d'ondes optique (2),
- des moyens de génération de paires ultérieures (P1-P3) d'impulsions laser, chaque paire (P1-P3) étant constituée d'une impulsion de signal de commande (C1-C3) et d'une impulsion de signal de données (D1-D3), dans lequel lesdits moyens de génération des paires d'impulsions (P1-P3) sont conçus pour régler une fréquence optique de l'impulsion de signal de données (D1-D3) d'une paire d'impulsions (P1-P3) de façon à être dans une bande passante d'un décalage de fréquence de Brillouin du guide d'ondes au-dessus d'une fréquence optique de l'impulsion de signal de commande (C1-C3) de la même paire d'impulsions (P1-P3), et/ou pour régler une différence entre une fréquence optique de l'impulsion de signal de données (D1-D3) et une somme d'une fréquence optique de l'impulsion de signal de commande (C1-C3) de la même paire d'impulsions (P1-P3) et d'un décalage de fréquence de Brillouin, de façon à à être dans une bande passante dudit décalage de fréquence de Brillouin,
- des moyens de couplage des impulsions de signal de commande (C1-C3) de paires d'impulsions ultérieures (P1-P3) dans une première extrémité (4) dudit guide d'ondes (2), et des moyens de couplage des impulsions de signal de données (D1-D3) dans une seconde extrémité (5) dudit guide d'ondes (2), dans lequel l'appareil (15) est conçu pour régler un retard temporel (dT12, dT23) entre une première paire d'impulsions (P1) et une seconde paire d'impulsions ultérieure (P2) de façon à être inférieur à un temps de décroissance d'une onde acoustique (10) générée par une diffusion de Brillouin stimulée dans le guide d'ondes (2), de telle sorte qu'en propageant une seconde impulsion de signal de données (D2) de la seconde paire d'impulsions (P2) à travers le guide d'ondes (2), une dépendance de ladite seconde impulsion de signal de données (D2) vis-à-vis d'une première impulsion de signal de données (D1) de la première paire d'impulsions (D1) est induite par l'intermédiaire d'une première onde acoustique (10) générée par un processus de diffusion de Brillouin stimulée.

14. Appareil (15) selon la revendication 13,
dans lequel une longueur dudit guide d'ondes optique (2) est choisie, en fonction dudit retard temporel (dT12, dT23) et/ou dudit temps de décroissance d'une onde acoustique (10) générée par un processus de diffusion de Brillouin stimulée dans le guide d'ondes (2), de telle sorte que
- une impulsion de signal de commande (C1) d'une première paire d'impulsions (P1) interagit tout d'abord avec l'impulsion de signal de données (D1) correspondante de la première paire d'impulsions (P1) et, après poursuite de la propagation à travers le guide d'ondes (2), interagit avec l'impulsion de signal de données (D2) de la seconde paire d'impulsions ultérieure (P2), et/ou
- une impulsion de signal de données (D1) d'une première paire d'impulsions (P1) interagit tout d'abord avec l'impulsion de signal de commande (C1) correspondante de la première paire d'impulsions (P1) et, après transformation et poursuite de la propagation dans le guide d'ondes (2), interagit avec l'impulsion de signal de commande (C2) de la seconde paire d'impulsions ultérieure (P2).

15. Réseau neuronal optique récurrent, comprenant l'appareil (15) selon la revendication 13 ou la revendication 14.
